# EUROPEAN PATENT APPLICATION

(11) **EP 4 852 107 A1**
(43) Date of publication of application: **09.12.2026**
(21) Application number: 25180820.0
(22) Date of filing: 04.06.2025
(51) Int. Cl.: H01M 8/04089, H01M 8/0432, H01M 8/0438, H01M 8/04701, H01M 8/04746, H01M 8/0662, H01M 8/04111, H01M 8/10, H01M 8/12

(54) **METHOD FOR REGULATING THE TEMPERATURE OF AN OXIDATION CATALYST IN A FUEL CELL SYSTEM**

(71) Applicant: AIRBUS Operations GmbH, 21129 Hamburg (DE)
(72) Inventor: Soukup, Nikolaus, 21129 Hamburg (DE); Weidenbach, Yannik, 21129 Hamburg (DE)
(74) Representative: KASTEL Patentanwälte PartG mbB

(57) **Abstract**

In order to improve the removal of hydrogen from the exhaust gases of a fuel cell system (1), a method for regulating the exhaust temperature of an oxidation catalyst (10) in a fuel cell system (1) is provided. The fuel cell system (1) comprises a fuel cell stack (2) comprising a cathode side (3) and an anode side (4), a first flow path (5) configured to supply a hydrogen-containing fuel to the fuel cell stack (2), a second flow path (7) configured to supply an oxygen-containing gas to the fuel cell stack (2), an exhaust path (9) comprising an oxidation catalyst (10) and a temperature sensor (11) for determining the temperature of the oxidation catalyst (10). The method comprises setting an initial value of a pressure differential, Δp, between an anode pressure, p_{anode} and a cathode pressure, p_{cathode}, wherein p_{anode} > p_{cathode}, determining a predetermined operating temperature range, (Tₘₐₓ-Tₘᵢₙ), of the oxidation catalyst (10), wherein Tₘₐₓ > Tₘᵢₙ, measuring a temperature T of the oxidation catalyst (10); if T > Tₘₐₓ, then decreasing, Δp, in order to decrease the temperature T of the exhaust gas and if T < Tₘᵢₙ, then increasing, Δp, in order to increase the temperature T of the exhaust gas, wherein p_{anode} > p_{cathode}.

## Description

The invention relates to a method for regulating the temperature of an oxidation catalyst in a fuel cell system, a control unit for regulating the temperature of an oxidation catalyst in fuel cell system, a fuel cell system, a computer program product and a computer readable storage medium and a vehicle comprising at least one fuel cell system.

An example of a vehicle is an aircraft such as an aeroplane, for example a fixed wing aeroplane. Some types of aeroplanes have one or more propellers for propulsion. Aircraft with electrical propulsion are being developed. An example of an electrical propulsion system for an aircraft comprises fuel cells which supply electricity to an electric motor which drives the propulsion propeller of the aircraft. The fuel cells receive hydrogen and oxygen and convert chemical energy into electrical energy, which results from the reaction of hydrogen in the presence of oxygen. Hydrogen is generally obtained from a hydrogen tank on board the vehicle and oxygen may be taken from the ambient air.

Published patent application US 2023/0399116 A1 discloses an example of an electrical supply system of an electric propulsion system of an aircraft. The electrical supply system comprises at least two sets of fuel cells designed to supply electrically an electric motor or a set of electric motors driving a propulsion propeller.

An object of the invention is to improve the efficiency of fuel cell systems, which may, for example, be used in an electrical propulsion system for a vehicle, such as an aircraft.

This object is solved by the subject matter of the independent claims. Further advantages arise from the subject matter of the dependent claims.

According to the invention, a method for regulating the exhaust temperature of an oxidation catalyst in a fuel cell system is provided. The fuel cell system comprises at least one fuel cell stack comprising a cathode side and an anode side, a first flow path configured to supply a hydrogen-containing fuel to the fuel cell stack, a second flow path configured to supply an oxygen-containing gas to the fuel cell stack, and an exhaust path. The exhaust path comprises an oxidation catalyst and a temperature sensor for determining the temperature of the oxidation catalyst. The method comprises setting an initial value of a pressure differential Δp between an anode pressure p_{anode} and a cathode pressure p_{cathode}, wherein p_{anode} > p_{cathode}, determining a predetermined operating temperature range, (Tₘₐₓ-Tₘᵢₙ), of the oxidation catalyst, wherein Tₘₐₓ > Tₘᵢₙ, and measuring a temperature T of the oxidation catalyst. If T > Tₘₐₓ, then Δp is decreased in order to decrease the temperature T of the exhaust gas. If T < Tₘᵢₙ, then Δp is increased in order to increase the temperature T of the exhaust gas, wherein p_{anode} > p_{cathode}.

The fuel cell typically comprises an anode, a cathode, and an electrolyte that allows ions, e.g. positively charged hydrogen ions (protons), to move between the two sides of the fuel cell. At the anode, a catalyst causes the fuel to undergo oxidation reactions that generate ions (often positively charged hydrogen ions) and electrons. The ions move from the anode to the cathode through the electrolyte. At the same time, electrons flow from the anode to the cathode through an external circuit, producing direct current electricity. At the cathode, another catalyst causes ions, electrons, and oxygen to react, forming water and possibly other products. Individual fuel cells may produce relatively small electrical potentials so that the fuel cells are "stacked", or placed in series, to create sufficient voltage to meet an application's requirements. The term fuel cell is used to encompass arrangements including a stack of fuel cells. A fuel cell has the advantage of high energy efficiency.

Preferably, the fuel cell stack is a polymer electrolyte membrane (PEM) fuel cell stack. However, any type of fuel cell suitable for the application may be used. For example, a solid oxide fuel cell (SOFC) stack may be used.

The invention is based on the relationship between the pressure differential (Δp) across the fuel cell and the exhaust temperature of the oxidation catalyst. A higher pressure differential, where Δp = p_{anode} - p_{cathode}, i.e. an increased pressure at the anode, p_{anode}, relative to the pressure, p_{cathode}, of the cathode, leads to an increase in the temperature of the exhaust gases and consequently the temperature of the oxidation catalyst. This is because the higher pressure differential leads to a higher flow through the oxidation catalyst which then leads to more energy being released during the oxidation. Lowering the pressure differential, either by lowering the anode pressure or by raising the cathode pressure, for example, leads to a reduction in the exhaust gas temperature and the temperature of the oxidation catalyst. The temperature of the exhaust gases may be measured at a point in the exhaust path that is downstream of the oxidation catalyst.

Furthermore, during the regulation method, the anode pressure should remain higher than the cathode pressure. If the anode pressure falls below or equals the cathode pressure, purging would not be possible, resulting in no hydrogen flow. The operating strategy ensures that the pressures are actively regulated to maintain optimal conditions for the operation of the oxidation catalyst while keeping the anode pressure higher than the cathode pressure.

The present invention proposes to actively regulate the pressures at the anode and cathode of the fuel cell stack in order to control the temperature of the oxidation catalyst. This eliminates the need for extra components and improves system performance and efficiency. The present method also avoids the need to directly controlling the reactants which necessitates additional measurement devices and the use of additional external components, such as specific heaters or heat elements to raise the temperature, or coolant systems to reduce it.

In an embodiment, the pressure differential Δp is increased by increasing the anode side pressure p_{anode} and/or decreasing the cathode side pressure p_{cathode}, and Δp is decreased by decreasing the anode side pressure p_{anode} and/or increasing the cathode side pressure p_{cathode}.

In an embodiment, the anode side pressure is increased or decreased by adjusting an anode mass flow by controlling an anode inlet valve located in the first flow path.

In an embodiment, the cathode pressure is increased or decreased by adjusting a cathode mass flow by controlling a cathode back pressure valve located in the exhaust path.

In some embodiments of the fuel cell system, the anode inlet valve is located upstream of the fuel cell stack and the cathode back pressure valve is located downstream of the fuel cell stack.

In an embodiment, the fuel cell system further comprises a purge valve, which is located downstream of the fuel cell stack and which has an inlet that is coupled to the anode side and an outlet that is coupled to an outlet of the cathode side and to the exhaust path. The pressure differential Δp comprises the pressure differential across the purge valve. An increase in Δp increases the flow rate through the purge valve and a decrease in Δp decreases the flow rate through the purge valve.

The determining the temperature T of the oxidation catalyst may comprise measuring the temperature of the exhaust gas. The temperature of the oxidation catalyst can be inferred from the measured value of the temperature of the exhaust gas. Alternatively, the temperature of the oxidation catalyst may be measured directly.

The invention also provides a control unit for regulating the exhaust temperature of an oxidation catalyst in a fuel cell system. The control unit is configured to perform the method of any one of the embodiments described herein. For example, the control unit may comprise a processor for executing a program for performing the method of any one of the embodiments described herein and memory for storing the pre-determined temperature range or ranges. The control unit receives a signal which may be used to measure the temperature of the exhaust gas and/or oxidation catalyst and sends signals for controlling the anode inlet valve and cathode back pressure valve.

The invention also provides a fuel cell system comprising a fuel cell stack comprising a cathode side and an anode side, a first flow path configured to supply a hydrogen-containing fuel to the fuel cell stack, a second flow path configured to supply an oxygen-containing gas to the fuel cell stack, an exhaust path comprising an oxidation catalyst, a temperature sensor for determining the temperature of the oxidation catalyst and the control unit for regulating the exhaust temperature of the oxidation catalyst in the fuel cell system that is configured to perform the method of any one of the embodiments described herein.

The fuel cell stack may be a Polymer Electrolyte Membrane fuel cell stack or a Soild Oxide Fuel Cell stack.

In an embodiment, the system comprises a purge valve having an inlet and an outlet. The anode side of the fuel cell stack has an outlet that is coupled to the inlet of a purge valve. The outlet of the purge valve is coupled to the exhaust path. The cathode side of the fuel cell stack has an outlet that is coupled to the outlet of the purge valve and to the exhaust path.

In an embodiment, the first flow path comprises an anode inlet valve, the second flow path comprises a cathode inlet filter, a compressor and a heat exchanger, and the exhaust path comprises downstream of a purge valve a cathode water separator which is coupled to a cathode back pressure valve. Optionally, the exhaust path further comprises downstream of the purge valve, an expander which is coupled to the cathode water separator and the cathode separator is coupled to the cathode back pressure valve.

The fuel cell system may comprise a recirculation architecture comprising a recirculation path coupled between the anode side outlet and the anode side inlet and comprising an anode water separator and a recirculation pump. Alternatively, the fuel cell system comprises a dead end architecture.

The invention also provides a computer program product comprising program code instructions which, when the program is executed by a processor, cause the processor to perform the method of any one of the embodiments described herein.

The invention also provides a computer-readable storage medium comprising program code instructions which, when executed by a processor, cause the processor to perform the method of any one of the embodiments described herein.

The invention also provides a vehicle comprising at least one fuel cell system according to any one of the embodiments described herein.

The vehicle may further comprise an electric motor coupled to the at least one fuel cell system. The electric motor may be used to propel the vehicle.

In an embodiment, the vehicle is an aircraft, for example a propeller driven aircraft. In an embodiment, the aircraft is a propeller driven aeroplane. The aircraft may comprise more than one propeller.

The fuel cell stack may be part of a powertrain which further comprises at least one electric motor. The fuel cell system supplies electricity to an electric motor which drives at least one propeller of the aircraft. The at least one propeller may be a propulsion propeller which is used to propel the aircraft. The aircraft may be a fixed wing propeller-driven aeroplane. Alternatively, or in addition, the fuel cell system is used as an auxiliary power unit. The auxiliary power unit may be configured to supply electric power and/or pneumatic power to auxiliary systems of the aircraft.

In an embodiment, the propeller comprises two or more propeller sub-units. For example, the propeller sub-units may be counter-rotating propeller sub-units.

Embodiments will now be described with reference to the drawings, in which:
Fig. 1 illustrates a fuel cell system according to a first embodiment;
Fig. 2 illustrates a fuel cell system according to a second embodiment;
Fig. 3 illustrates a flow diagram of a method of regulating the temperature of an oxidation catalyst in a fuel cell system;
Fig. 4 illustrates a diagram of thermodynamic formulas for calculating the temperature of the catalyst using measured parameters obtained from the fuel cell system and
Fig. 5 illustrates an aeroplane in which the fuel cell system of any one of the embodiments described herein may be used.

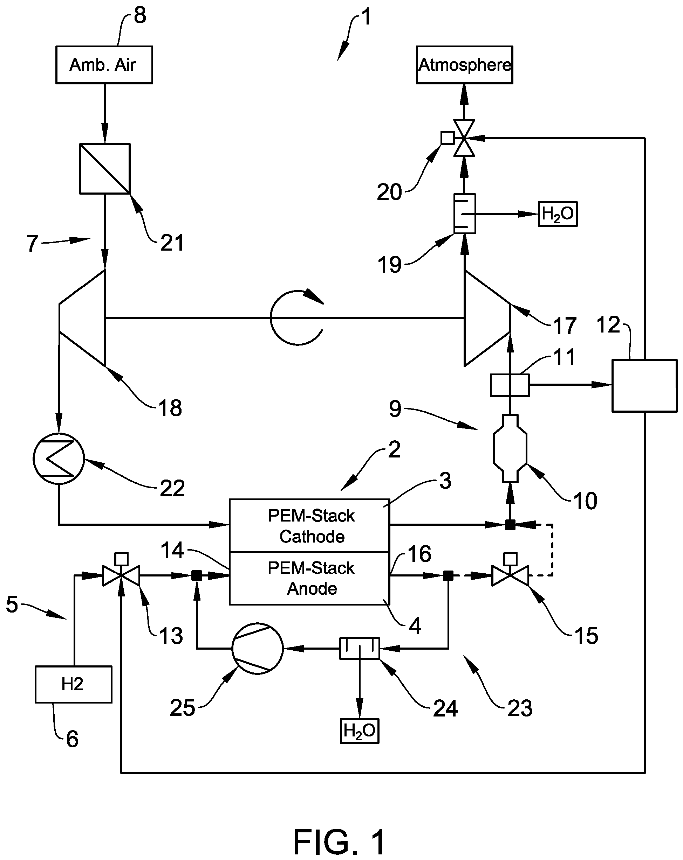

Fig. 1 illustrates a fuel cell system 1 according to a first embodiment of the invention. The fuel cell system 1 comprises a fuel cell stack 2 which comprises a cathode side 3 and an anode side 4. The fuel cell stack 2 comprises a plurality of fuel cells, each comprising an anode and a cathode, which are connected in series. The fuel cell stack 2 may be a polymer electrolyte membrane (PEM) fuel cell stack. Alternatively, any type of fuel cell stack may be used, for example a solid oxide fuel cell (SOFC) stack may be used.

The fuel cell system 1 comprises a first flow path 5 which is configured to supply a hydrogen-containing fuel from a source 6 to the fuel cell stack 2. The first flow path 5 may be configured to supply the hydrogen -containing fuel to the anode side 4 of the fuel cell stack 2. The fuel cell system 1 further comprises a second flow path 7 which is configured to supply an oxygen-containing gas 8, which may be ambient air, for example, to the fuel cell stack 2. The second flow path 7 may be configured to supply the oxygen-containing gas 8 to the cathode side 3 of the fuel cell stack 2. The fuel cell system 1 further comprises an exhaust path 9 from the fuel cell 2 to the ambient which comprises an oxidation catalyst 10. A temperature sensor 11 is provided in the exhaust path 9 for measuring the temperature of the oxidation catalyst 10. In some embodiments, the temperature sensor 11 is positioned and configured to measure the temperature of the exhaust gases which pass through the exhaust path 9 downstream of the oxidation catalyst 10. The temperature of the oxidation catalyst 10 can be determined from the measured temperature of the exhaust gases.

The exhaust path 9 is configured to receive exhaust gases from the fuel cell stack 2 from both the cathode side 3 and the anode side 4 and to direct these exhaust gases to the oxidation catalyst 10. The oxidation catalyst 10 serves to remove hydrogen from the exhaust gas by mixing the hydrogen with an oxygen-containing gas, e.g. air, and causing a reaction to form water. The fuel cell system 1 further comprises a control unit 12 which is used to regulate the exhaust temperature of the oxidation catalyst 10 in order to create a more efficient reaction and more efficiently and completely remove the hydrogen from the exhaust gas.

The first flow path 5 comprises an anode inlet valve 13 which controls the mass flow rate of the hydrogen containing gas which is supplied from the source 6 to the anode side 4 of the fuel cell stack 2. The anode inlet valve 13 is connected in the first flow path 5 between the hydrogen-containing gas source 6 and an inlet 14 of the anode side 4. The exhaust path 9 comprises a purge valve 15 which has an inlet which is connected to the anode side outlet 16 and an outlet which is coupled to the oxidation catalyst 10. An outlet of the cathode side 3 and an outlet of the anode side 2 merge downstream of the purge valve 15 and upstream of the oxidation catalyst 10.

Downstream of the oxidation catalyst 10, the exhaust path 9 may optionally include an expander 17. The expander 17 is mechanically coupled to a compressor 18 located in the second path 7. Downstream of the expander 17, the exhaust path 9 comprises a cathode water separator 19 for separating water from the exhaust gas and downstream of the cathode water separator 19, the exhaust path 9 comprises a cathode back pressure valve 20 through which the exhaust gases flow into the atmosphere. The second flow path 7 comprises a cathode inlet filter 21 which is upstream of the compressor 18 and a heat exchanger 22 which is downstream of the compressor 18.

The purge valve 15 is used to remove (purge) accumulated nitrogen and water as steam and water from the anode path. The purge function may be performed in a pulsed manner, causing the oxidation temperature to follow a temperature cycle going up and down. This combined with the high humidity present in cathode and anode gases causes additional challenges for the oxidation catalyst 10.

The control unit 12 receives a signal representative of the temperature of the exhaust gas from the temperature sensor 11. The control unit 12 is configured to adjust the anode inlet valve 13 in order to adjust the mass flow rate of the hydrogen containing gas into the fuel cell stack 2 and is also configured to adjust the cathode back pressure valve 20 in order to regulate the mass flow rate of the exhaust gas into the atmosphere. Adjusting the position of the anode inlet valve 13 also adjusts the pressure, p_{anode}, in the anode side 4 of the fuel cell stack 2. Adjusting the cathode back pressure valve 20 adjusts the pressure, p_{cathode}, in the cathode side 3 of the fuel cell stack 2.

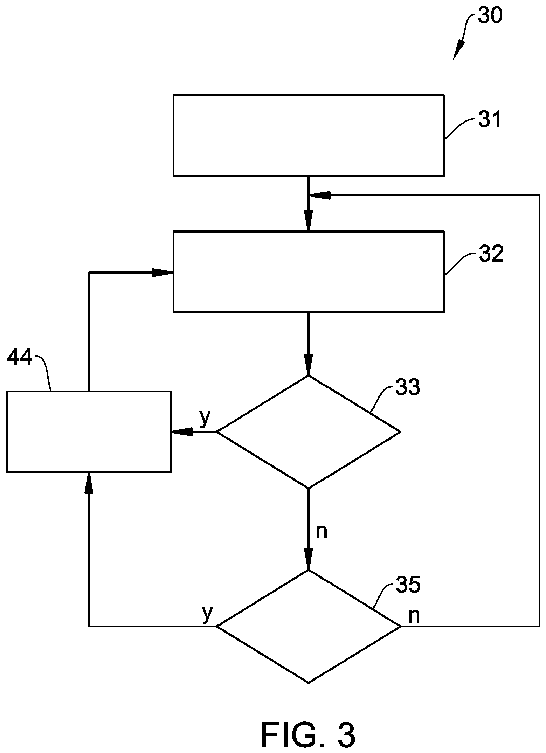

The control unit 12 is used to regulate the temperature of the oxidation catalyst 10 by using the thermodynamic effects of the change in the anode pressure, p_{anode}, and cathode pressure, p_{cathode}, and in particular, the pressure differential, Δp, over the purge valve 15, where Δp = p_{anode} - p_{cathode} and p_{anode} > p_{cathode}, in order to regulate the temperature of the oxidation catalyst 10 as explained in more detail below with reference to the flowchart of Fig. 3.

Fig. 1 illustrates a fuel cell system 1 which has a recirculation architecture. In a recirculation architecture, the fuel cell system 1 comprises a recirculation path 23 which is coupled between the anode outlet 16 and the anode inlet 14. The recirculation path 23 comprises an anode water separator 24 and a recirculation pump 25 which is located downstream of the anode water separator 24. Gas exiting the anode side 4 is returned by way of the recirculation path 23 and after the removal of water by the anode water separator 24 to the inlet of the anode side 4.

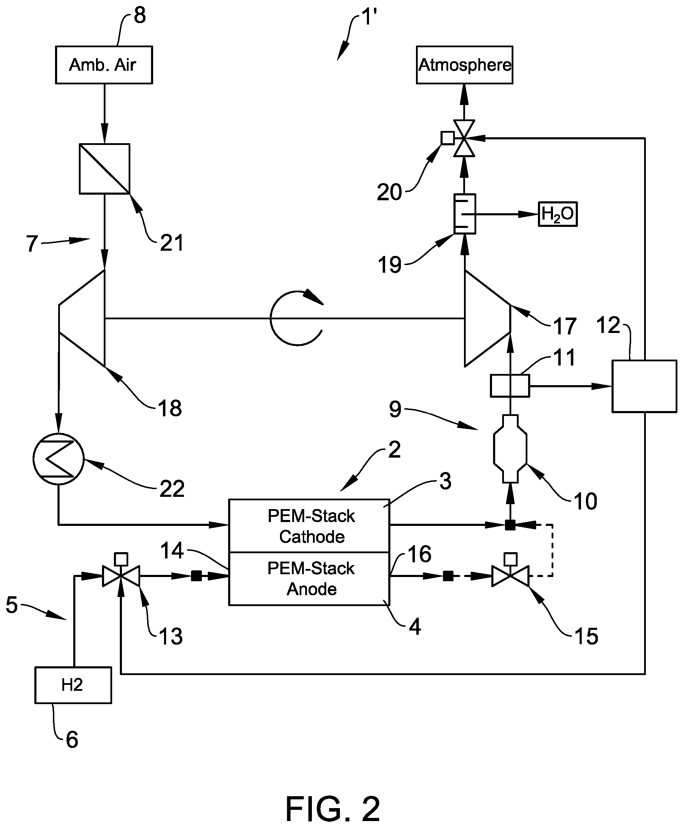

In a second embodiment illustrated in Fig. 2, the fuel cell system 1' has a dead end architecture in which the recirculation path 23 is omitted. Other features of the fuel cell system 1' of the second embodiment are the same as the fuel cell system 1 of the first embodiment and are not described again.

Fig. 3 illustrates a flowchart 30 of a method for regulating the exhaust temperature of an oxidation catalyst in a fuel cell system, which will be described with reference to the fuel cell systems 1, 1' illustrated in Figs 1 and 2. However, the method may be used for other types of the fuel cell system. In block 31, an initial pressure differential Δp between the anode pressure p_{anode} and the cathode pressure p_{cathode} is set. For example, Δp may be 200 mbar. The anode pressure p_{anode} may be the pressure at the outlet 16 of the anode side 4 of the fuel cell stack 2. The cathode pressure p_{cathode} may be the pressure at the outlet of the cathode side 3 of the fuel cell 2. Other initial parameters may also be set or determined. For example, the current temperature T of the oxidation catalyst. The anode pressure p_{anode} remains higher than the cathode pressure p_{cathode} throughout the method.

The differential pressure Δp describes the differential pressure across the purge valve 15 since the anode pressure p_{anode} is measured at the outlet 16 of the anode side 4 of the fuel stack 2 and is fluidly communicatively coupled with the inlet of the purge valve 15 and the pressure p_{cathode} is measured at the outlet of the cathode side 3 of the fuel cell stack 2 and is fluidly communicatively coupled with the outlet of the purge valve 15.

The method proceeds to block 32 in which the temperature T of the oxidation catalyst is determined. For example, the temperature T of the exhaust gas downstream of the oxidation catalyst 10 may be measured in order to determine the temperature T of the oxidation catalyst. The oxidation catalyst has a predetermined operating temperature range, Tₘₐₓ-Tₘᵢₙ, whereby Tₘₐₓ is greater than Tₘᵢₙ. The predetermined operating temperature range may vary and depend on the operating mode of the fuel cell stack 2. For example, a plurality of predetermined temperature ranges may be provided in dependence on the operating mode, e.g. a purge mode, a drive mode under high load conditions, or a drive mode under low load conditions. In this embodiment, the operating mode is determined and then the predetermined temperature range for that operating mode is determined.

The method proceeds to decision diamond 33 where it is determined whether the measured temperature T of the oxidation catalyst lies within the desired range Tₘₐₓ-Tₘᵢₙ. If the measured temperature T of the oxidation catalyst 10 is greater than temperature Tₘₐₓ and therefore above the desired temperature range, the method proceeds to block 34 and the differential pressure Δp is adjusted.

If T is greater than Tₘₐₓ, the temperature of the oxidation catalyst 10 should be reduced. This is performed by reducing the differential pressure, Δp. The differential pressure Δp may be reduced by decreasing the anode side pressure p_{anode} and/or increasing the cathode side pressure p_{cathode}. The anode side pressure, p_{anode}, may be decreased by adjusting the mass flow through the anode inlet valve 13, for example by slightly opening the anode inlet valve 13 located in the first flow path 5. The cathode pressure, p_{cathode}, may be increased by decreasing the flow rate through the cathode back pressure valve 20, for example by slightly closing the cathode back pressure valve 20 located in the exhaust path 9.

If in decision diamond 33, the measured temperature T is not greater than temperature Tₘₐₓ the method continues to decision diamond 35. If the measured temperature T is less than the lower value of the desired range Tₘᵢₙ, the method continues to box 44 where the differential pressure Δp is adjusted. In order to increase the temperature T, the differential pressure Δp is increased. This may be achieved by increasing the anode pressure, p_{anode}, for example by slightly closing the anode inlet valve 13, or by decreasing the cathode pressure, p_{cathode}, for example by opening the cathode back pressure valve 20. The method then returns and the temperature T of the exhaust gas is measured again in box 42. If in decision diamond 45, the temperature is greater than the minimum, Tₘᵢₙ, and therefore lies within the desired range, the method continues to measure T the temperature of the exhaust gas in box 42.

The method may end when the control unit 12 receives a signal that regulation is not required, for example as the electric motor has been switched off.

This operating strategy allows the fuel cell system 1,1' to have an improved performance by maintaining the exhaust gas temperature of the oxidation catalyst within a desired predetermined temperature range, thus improving fuel efficiency and ensuring an increased and preferably complete hydrogen conversion.

The mass flow through the purge valve is a factor in determining the maximum (hydrogen) flow and ensuring proper system operation. The anode pressure should remain higher than the cathode pressure throughout the regulating method. If the anode pressure falls below or equals the cathode pressure, purging would not be possible, resulting in no hydrogen flow. The operating strategy ensures that the pressures in the fuel cell system are actively regulated to maintain optimal conditions while keeping the anode pressure higher than the cathode pressure. The formula used to calculate the mass flow through the purge valve 15 is as follows: $\dot{n} = {ρ}_{N} ⋅ 514 ⋅ {K}_{V} ⋅ \sqrt{\frac{Δ p ⋅ {p}_{2}}{{ρ}_{N} ⋅ T}}$
- n = Molar flow rate through valve
- = Standard ρ density at anode N
- KV = Valve flow coefficient
- Δ*p* = Pressure difference across the valve
- p2 = Cathode Pressure
- T = Temperature at anode

The exhaust temperature of an oxidation catalyst 10 can be calculated using the following formula based on the mass flow through the purge valve 15: ${T}_{ad} = {T}_{0} + \frac{{\dot{H}}_{U} + {\dot{H}}_{mix}}{{c}_{p , mix} \left({T}_{ad}\right) ⋅ \dot{n}}$
- Tmax = Maximum Exhaust Temperature
- T0 = Reference Temperature
- HU = Reaction Enthalpy Stream
- Hmix = Enthalpy Stream of the gas mixture
- cp, mix = Specific heat capacity of the gas mixture

The operating strategy for temperature control also includes an initial setup: The system is initialized with default pressure and temperature for the anode and cathode (Δp = 200mbar). Based on the desired operating temperature and operation mode, adjustments can be made.

In an active pressure regulation mode, the pressures are continuously adjusted based on real time exhaust temperature to maintain the temperature in the desired range, for example for optimal operation of the oxidation catalyst.

In a purge cycle mode, the purge valve operates as needed, either continuously (bleeding) or at intervals, to remove gases from anode side and maintain a hydrogen flow.

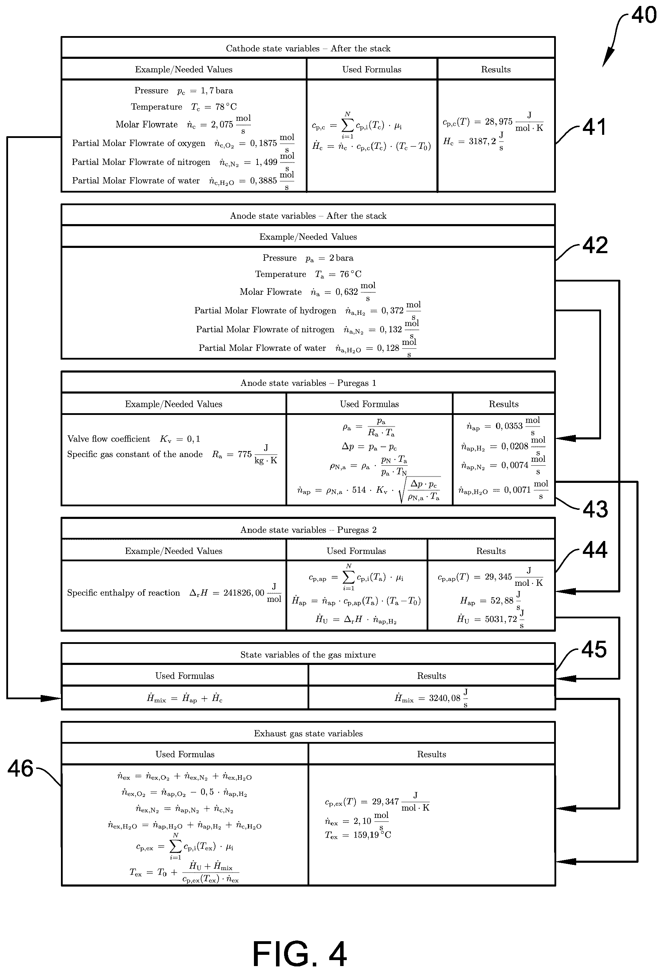

Fig. 4 illustrates a flow diagram 40 of thermodynamic formulas for calculating the temperature of the oxidation catalyst 10 using measured parameters obtained from the fuel cell system 1, 1'. The state variables, the thermodynamic formulas and an example of calculated values. Box 41 shows the cathode state variables after the stack, box 42 shows anode state variables after the stack, box 43 shows anode state variables purge gas 1, box 44 shows anode state variables purge gas 2, box 45 shows state variables of the gas mixture and box 46 shows exhaust gas state variables.

The method starts at box 41 which illustrates state variables of the cathode side 3 the thermodynamic formulas and an example of calculated enthalpy of the gas H_{c}, which is obtained at a location in the fuel system 1; 1' after, that is immediately downstream, of the fuel cell stack 2. Box 42 illustrates state variables of the anode side 4 which are obtained at a location in the fuel system 1; 1' after, that is immediately downstream, of the fuel cell stack 2. These values from box 42 are used in box 43 to calculate the mass low rate of the gas down stream of the purge valve 15. Values obtained in box 42 are also used in box 44 in to calculate the reaction enthalpy Hᵤ of the gas stream, the enthalpy Hₐₚ of the stream of the anode side gas upstream of the purge valve 15 and the specific heat capacity c_{p,ap} of the gas mixture downstream of the purge valve 15. Values calculated in boxes 41 and 44 and used in box 45 to calculate the enthalpy Hₘᵢₓ of the exhaust gas. The value Hₘᵢₓ calculated in box 45 and the values calculated in box 43 are used in box 46 to calculate the temperature Tₑₓ of the exhaust gas.

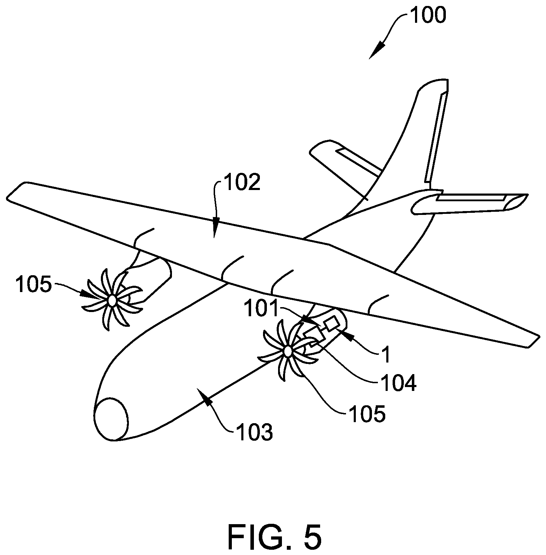

Fig. 5 illustrates a schematic view of an aircraft 100 which may comprise a powertrain 101 including the one or more fuel cell systems 1; 1' according to any one of the embodiments described herein. In this embodiment, the aircraft 100 is a fixed wing propeller-driven aeroplane and has wings 102 that extend from opposing sides of a fuselage 103. The powertrain 101 comprises at least one power source, such as one or more fuel cell systems 1, 1', which supply electricity to an electric motor 104 which drives the propulsion propeller 105 of the aircraft 100. In the illustrated aircraft 100, two propellers 105 are provided, one on each wing. In other types of aircraft, one propeller may be provided on the nose of the fuselage or more than two propellers may be used for propulsion of the aircraft 100. Alternatively, or in addition, the fuel cell system 1, 1' may be used to power an auxiliary drive.

The invention provides a fuel cell system 1, 1' and focuses on the integration of an oxidation catalyst 10 and the control of its exhaust temperature by managing the pressure at the anode and cathode of the fuel cell stack 2. The method of regulating the temperature of the oxidation catalyst can be used in any fuel cell systems where precise pressure and temperature control is desirable.

The present invention provides a method to control the temperature of the oxidation catalyst 10 by adjusting the pressures at the anode and cathode of a fuel cell stack 2. The control of the temperature is based on the effect that the anode gas mass flow through the purge valve 15 depends on the pressure differential Δp between anode and cathode and that there is a physical relationship between the mass flow in the purge valve 15 and the pressure difference Δp over the purge valve 15. By controlling the pressure differential Δp, the exhaust temperature can be precisely regulated, leading to improved catalyst performance. While the pressures are increased/ decreased it is important to maintain the proper pressure balance when regulating the pressure to ensure safe operation.

Another aspect of the invention is that the operating conditions of the catalyst 10 can be modified to operate the catalyst 10 in more beneficial boundary conditions. One example is that there are operational loads where the cathode and anode gases contain a higher amount of liquid and or gaseous water. This water can block parts of the catalytic surface and cause reduced activity and higher hydrogen emissions. By adjusting the pressures, it is possible to raise the temperature of the oxidation catalyst 10 to help remove the accumulated water from the catalytic surface.

A further advantage of this invention is its ability to control the temperature of the oxidation catalyst 10 through active pressure regulation using components that are already available in the fuel cell system 1, 1' and without the need for additional components such as heaters or a cooling system. This simplifies the system design and reduces both the complexity and cost of operation. Furthermore, the system can achieve higher or lower exhaust temperatures as needed for better performance optimization. This flexibility ensures that the oxidation catalyst 10 can be operated at the most efficient temperatures under different operating points, leading to improved hydrogen conversion and extended catalyst lifespan.

### List of reference signs:

- 1: fuel cell system
- 1': fuel cell system
- 2: fuel cell stack
- 3: cathode side
- 4: anode side
- 5: first flow path
- 6: hydrogen-containing fuel source
- 7: second flow path
- 8: oxygen-containing gas
- 9: exhaust path
- 10: oxidation catalyst
- 11: temperature sensor
- 12: control unit
- 13: anode inlet valve
- 14: anode inlet
- 15: purge valve
- 16: anode outlet
- 17: expander
- 18: compressor
- 19: cathode water separator
- 20: cathode backpressure valve
- 21: cathode inlet filter
- 22: heat exchanger
- 23: recirculation path
- 24: anode water separator
- 25: recirculation pump

- 30: flowchart
- 31: block
- 32: block
- 33: decision diamond
- 34: block
- 35: decision diamond

- 40: flow diagram
- 41: cathode state variables after the stack
- 42: anode state variables after the stack
- 43: anode state variables purge gas 1
- 44: anode state variables purge gas 2
- 45: state variables of the gas mixture
- 46: exhaust gas state variables

- 100: aircraft
- 101: powertrain
- 102: wing
- 103: fuselage
- 104: electric motor
- 105: propeller

## Claims

1. A method for regulating the exhaust temperature of an oxidation catalyst (10) in a fuel cell system (1; 1'), the fuel cell system (1; 1') comprising a fuel cell stack (2) comprising a cathode side (3) and an anode side (4), a first flow path (5) configured to supply a hydrogen-containing fuel to the fuel cell stack (2), a second flow path (7) configured to supply an oxygen-containing gas to the fuel cell stack (2), an exhaust path (9) comprising an oxidation catalyst (10) and a temperature sensor (12) for determining the temperature of the oxidation catalyst (10), the method comprising:
setting an initial value of a pressure differential, Δp, between an anode pressure, p_{anode} and a cathode pressure, p_{cathode}, wherein p_{anode} > pcathode;
determining a predetermined operating temperature range, (Tₘₐₓ-Tₘᵢₙ), of the oxidation catalyst (10), wherein Tₘₐₓ > Tₘᵢₙ;
measuring a temperature T of the oxidation catalyst (10);
if T > Tₘₐₓ, then decreasing, Δp, in order to decrease the temperature T of the exhaust gas and if T < Tₘᵢₙ, then increasing, Δp, in order to increase the temperature T of the exhaust gas, wherein p_{anode} > p_{cathode}.

2. The method according to claim 1, wherein Δp is increased by increasing the anode side pressure, p_{anode}, and/or decreasing the cathode side pressure, p_{cathode}, and wherein Δp is decreased by decreasing the anode side pressure, p_{anode}, and/or increasing the cathode side pressure, p_{cathode}.

3. The method according to claim 2, wherein the anode side pressure is increased or decreased by adjusting an anode mass flow by controlling an anode inlet valve (13) located in the first flow path (5), and the cathode pressure is increased or decreased by adjusting a cathode mass flow by controlling a cathode back pressure valve (20) located in the exhaust path (9).

4. The method according to any one of claims 1 to 4, wherein the fuel cell system (1; 1') further comprises a purge valve (15), which is located downstream of the fuel cell stack (2) and has an inlet that is coupled to the anode side (4) and an outlet that is coupled to an outlet of the cathode side (3) and to the exhaust path (9), and wherein the pressure differential, Δp, comprises the pressure differential across the purge valve (15).

5. A control unit (12) for regulating the exhaust temperature of an oxidation catalyst (10) in a fuel cell system (1; 1'), the control unit (12) being configured to perform the method of any one of claims 1 to 4.

6. A fuel cell system (1; 1') comprising:
a fuel cell stack (2) comprising a cathode side (3) and an anode side (4);
a first flow path (5) configured to supply a hydrogen-containing fuel to the fuel cell stack (2);
a second flow path (7) configured to supply an oxygen-containing gas to the fuel cell stack (2);
an exhaust path (9) comprising an oxidation catalyst (10) and a temperature sensor (11) for determining the temperature of the oxidation catalyst (10);
a control unit (12) for regulating the exhaust temperature of the oxidation catalyst (10), the control unit (12) being configured to perform the method of any one of claims 1 to 4.

7. The fuel cell system (1; 1') according to claim 6, wherein the fuel cell stack (2) is a Polymer Electrolyte Membrane fuel cell stack or a Solid Oxide Fuel Cell stack.

8. The fuel cell system (1; 1') according to claim 6 or claim 7, wherein the anode side (4) has an outlet (16) that is coupled to an inlet of a purge valve (15), an outlet of the purge valve (15) is coupled to the exhaust path (9) and the cathode side (3) has an outlet that is coupled to the outlet of the purge valve (15).

9. The fuel cell system (1; 1') according to any one of claims 6 to 8, wherein the first flow path (5) comprises an anode inlet valve (13), the second flow path (7) comprises a cathode inlet filter (21), a compressor (18) and a heat exchanger (22), and the exhaust path (9) comprises downstream of a purge valve (15); a cathode water separator (19) which is coupled to a cathode back pressure valve (20).

10. The fuel cell system (1; 1') according to any one of claims 6 to 9, wherein the fuel cell system (1; 1') comprises a recirculation architecture comprising a recirculation path (23) coupled between the anode side outlet (16) and the anode side inlet (14) and comprising an anode water separator (24) and a recirculation pump (25), or wherein the fuel cell system (1; 1') comprises a dead end architecture.

11. A computer program product comprising program code instructions which, when the program is executed by a processor, cause the processor to perform the method according to any of claims 1 to 4.

12. A computer-readable storage medium comprising program code instructions which, when executed by a processor, cause the processor to perform the method according to any of claims 1 to 4.

13. A vehicle (100) comprising at least one fuel cell system (1; 1') according to any one of claims 6 to 10.

14. The vehicle (100) according to claim 13, further comprising an electric motor (104) coupled to the at least one fuel cell system (1; 1'), wherein the electric motor (14) is configured to propel the vehicle (100).

15. The vehicle (100) according to claim 13 or claim 14, wherein the vehicle (100) is an aircraft.
